# EUROPÄISCHE PATENTSCHRIFT

(11) **EP 0 646 743 B1**
(45) Veröffentlichungstag und Bekanntmachung des Hinweises auf die Patenterteilung: **05.06.1996**
(21) Anmeldenummer: 93115558.4
(22) Anmeldetag: 27.09.1993
(51) Int. Cl.: F16K 7/17

(54) **Druckmittelbetätigtes Membranventil**
Pressure controlled diaphragm valve
Soupape à diaphragme commandée par un fluide sous pression

(43) Veröffentlichungstag der Anmeldung: 05.04.1995
(73) Patentinhaber: Regel + Messtechnik GmbH Regler- und Anlagenbau für Gas-Druckreglung, D-34123 Kassel (DE)
(72) Erfinder: Fischer, Rudolf, Dipl.-Ing., D-34132 Kassel (DE); Gärtner, Josef, Dipl.-Ing., D-34320 Söhrewald/Wellerode (DE)
(74) Vertreter: Walther, Robert, Dipl.-Ing. Walther, Walther & Hinz, Patentanwälte - European Patent Attorneys

(56) Entgegenhaltungen:
- EP-B- 0 190 414
- DE-C- 1 095 074
- GB-A- 1 295 355
- US-A- 4 181 151
- US-A- 4 846 215

## Beschreibung

Die Erfindung betrifft ein druckmittelbetätigtes Membranventil, dessen in einem Gehäuse eingespannte Membran auf einem Stützkörper aufliegt, der am Ende des Eingangskanals angeordnet ist und konzentrisch zum Eingangskanal Öffnungen aufweist, und der eine im Eingangskanal konzentrisch aber in Strömungsrichtung vor den Öffnungen angeordnete Dichtkante besitzt.

Ein Membranventil der eingangs genannten Art ist aus der EP-PS 0190 414 bekannt.

Die Membran eines Membranventils dient bekanntlich als elastische Trennstelle zwischen dem Eingangs- und Ausgangsraum des Membranventils. Die Druckdifferenz zwischen diesen beiden Räumen muß voll von der Membran aufgenommen werden.

Damit eine Überlastung der Membran bei Druckbeanspruchung vermieden wird, liegt die Membran auf einem Stützkörper auf, der zur Ausgangsseite mit entsprechenden Öffnungen versehen ist, über die das Durchströmmedium abfließen kann. Je nach Betriebssituation werden mehr oder weniger große Querschnitte der Öffnung an der Ausgangsseite freigegeben. Im geschlossenen Zustand des Membranventils sind die Öffnungen an der Ausgangsseite völlig abgedeckt. Damit nun in diesem Zustand eine absolut gasdichte Trennung vorhanden ist, besitzt der Stützkörper eine Dichtkante, die nach dem bekannten Stand der Technik in Richtung auf die Membran umlaufend überhöht ausgebildet ist. Durch die überhöhte Dichtkante wird an der Drosselmembran eine hohe spezifische Flächenpressung erreicht, die unter Einwirkung des Druckgefälles zwischen Ein- und Ausgangsraum und einer Schließfederkraft den einwandfreien Null-Abschluß realisiert. Bei Membranventilen ist diese Drosselmembran dem Differenzdruck zwischen Ein- und Ausgangsraum ausgesetzt. Der Eingangsdruck kann als nicht geregelte Größe erheblichen Schwankungen unterliegen. Diese Druckschwankungen haben Materialverschiebungen in Bereichen der Drosselmembran zur Folge. Derartige Materialverschiebungen ergeben sich auch, wenn der Gasverbrauch auf Null zurückgenommen wird und die Membran aus der Offenstellung in die Schließstellung übergeht. Die überhöhte Dichtkante auf dem Stützkörper verhindert, daß sich die beim Übergang von der Offenstellung in die Schließstellung auftretenden Materialverschiebungen ausgleichen können. Es kommt zu einem Materialstau vor der umlaufenden überhöhten Dichtkante. Beim erneuten Anfahren des Regelgerätes macht sich der Materialstau vor der Dichtkante dadurch bemerkbar, daß die Membran nicht kontinuierlich öffnet, sondern vielmehr sprunghaft in die Offenstellung übergeht.

Der Erfindung liegt daher die Aufgabe zugrunde, ein druckmittelbetätigtes Membranventil eines Regelgerätes derart auszubilden, daß ein sprunghaftes Öffnungsverhalten des Membranventiles vermieden wird.

Die Aufgabe wird erfindungsgemäß dadurch gelöst, daß die Dichtkante in Richtung auf den Eingangskanal stufenförmig abfallend ausgebildet ist. D.h., daß die Dichtkante unter Bildung einer Stufe von außen nach innen fällt. Beim Schließvorgang, oder bei einer Erhöhung des Differenzdruckes zwischen Ein- und Ausgangsraum ergeben sich Materialverschiebungen der Membran vornehmlich in dem Bereich, der außerhalb der Dichtkante liegt. Das Material versucht also, in dem Bereich zu fließen, der innerhalb der Dichtkante liegt. Durch die erfindungsgemäße stufenförmige Ausbildung der Dichtkante wird nun erreicht, daß eine derartige Bewegung der Membran ohne Behinderung möglich ist.

Es hat sich herausgestellt, daß insbesondere dann ein weiches und ruckfreies Anfahren des Gerätes auch nach größeren Eingangsdruckänderungen und nach längeren Schließzeiten gewährleistet ist, wenn die Höhe der Stufe der Dichtkante größer als 0,1 , aber kleiner als 0,5 x der Dicke der Drosselmembran ist.( 0,1 x s < h < 0,5 x s ( s = Dicke der Membran))

Im einzelnen ist weiter vorgesehen, daß die äußere Einspannfläche für die Membran gegenüber der inneren Kante der öffnungen an der Austrittsseite abgesenkt ist.

Anhand der Zeichnung wird nachstehend die Erfindung näher erläutert.

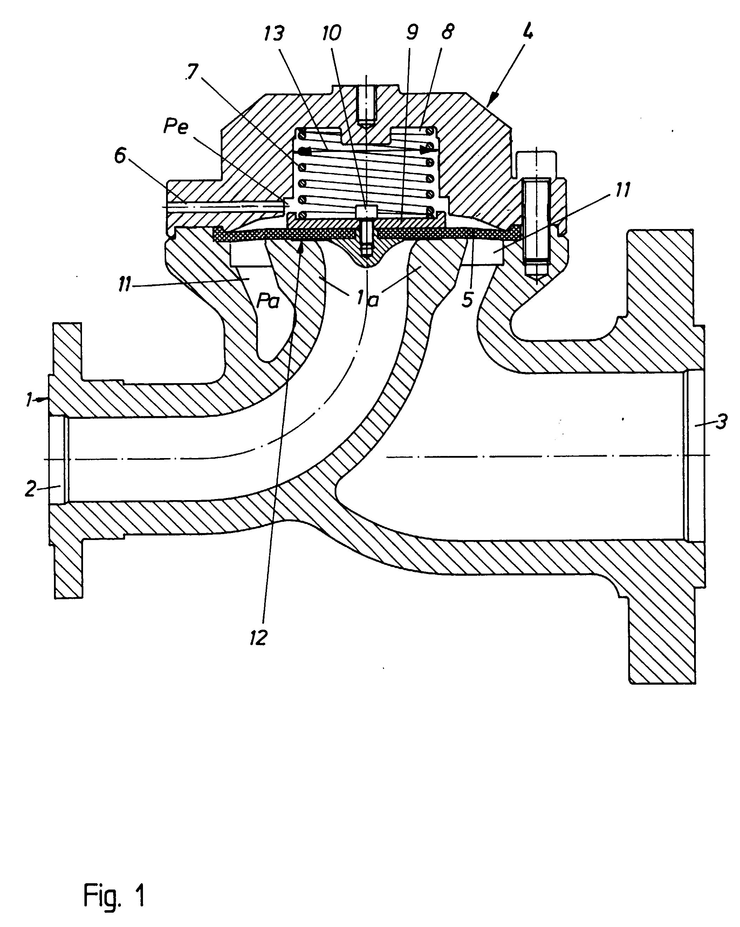

- Fig. 1: zeigt das Membranventil im Schnitt;
- Fig. 2: zeigt in vergrößerter Darstellung einen Ausschnitt des linken Teils der Membran mit dem Stützkörper.

Das Membranventil besteht aus dem Gehäuse 1 mit dem Eingangskanal 2 und dem Ausgangskanal 3.

Auf diesem Grundgehäuse 1 befindet sich der mit 4 bezeichnete Gehäusedeckel. Zwischen dem Gehäusedeckel 4 und dem Gehäuse 1 ist die Membran 5 eingespannt. Die Abstützung der Membran 5 erfolgt mit Hilfe des Stützkörpers 1a, der das Ende des Eingangskanales 2 bildet. D.h., daß der Stützkörper 1a ein Bestandteil des Gehäuses 1 ist. Der Gehäusedeckel 4 besitzt den Zugangskanal 6, der bis in den Stelldruckraum 7 reicht, der sich hinter der Membran 5 befindet. Der Stelldruckraum 7 nimmt die Feder 8 auf, die durch den Federteller 9 mit der Membran 5 durch eine Schraubverbindung 10 verbunden ist. Radial um den Stützkörper 1a herum sind in dem Gehäuse 1 öffnungen 11 in Form von Schlitzen vorgesehen, in denen der Ausgangsdruck Pa vorherrscht. Im Stellraum selbst, d.h. in dem Raum oberhalb der Membran 5, liegt bei geschlossenem Ventil der Eingangsdruck Pe an. Beim Regelvorgang wird dieser Druck durch den nicht dargestellten Regler auf einen Wert reduziert, der die Membran 5 so weit von den schlitzförmigen Öffnungen 11 abhebt, daß die zur Aufrechterhaltung des am Regler vorgegebenen Ausgangsdruckes erforderliche Gasmenge vom Eingangsraum 2 in den Ausgangsraum 3 überströmen kann. Der Zugangskanal 6 des Stelldruckraumes steht also durch den Regler in Verbindung mit dem Eingangskanal 2.

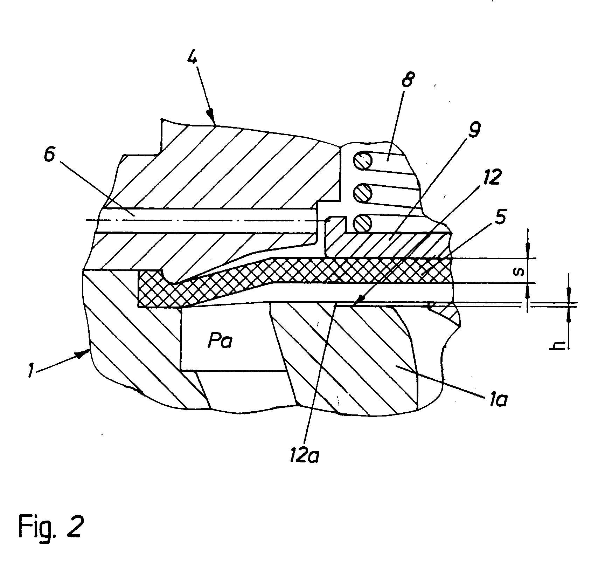

Auf dem Stützkörper 1a befindet sich die Dichtkante 12 (Fig. 2). Diese Dichtkante 12 besitzt einen in Richtung auf den Eingangskanal ausgebildeten Absatz 12a. Die Höhe des Absatzes 12a ist größer als 0,1 x der Dicke s, aber kleiner als 0,5 x der Dicke s der Membran 5.

## Patentansprüche

1. Druckmittelbetätigtes Membranventil, dessen in einem Gehäuse (1) eingespannte Membran (5) auf einem Stützkörper (1a) aufliegt, der am Ende eines Eingangskanals (2) angeordnet ist und konzentrisch zum Eingangskanal (2) Öffnungen (11) aufweist, und der eine zum Eingangskanal konzentrisch, aber im Strömungsrichtung vor den Öffnungen angeordnete Dichtkante (12) besitzt,
**dadurch gekennzeichnet**, daß die Dichtkante (12) in Richtung auf den Eingangskanal (2) stufenförmig abfallend ausgebildet ist.

2. Druckmittelbetätigtes Membranventil nach Anspruch 1, **dadurch gekennzeichnet**, daß die äußere Einspannfläche für die Membran (5) gegenüber der inneren Kante der Öffnungen (11) an der Austrittsseite abgesenkt ist.

3. Druckmittelbetätigtes Membranventil nach Anspruch 1 **dadurch gekennzeichnet**, daß die Höhe (h) der Stufe (12a) der Dichtkante (12) größer ist als 0,1 x der Dicke (s) der Membran (5) aber kleiner als 0,5x der Dicke (s) der Membran (5).

## Claims

1. Diaphragm valve which is actuable by pressure means and the diaphragm (5) of which, which is clamped in a housing (1), rests on a support body (1a), which is arranged at the end of an outlet channel (2) and has openings (11) concentric to the inlet channel (2) and which possesses a sealing edge (12) arranged concentrically to the inlet channel but in front of the openings with respect to flow direction, characterised thereby that the sealing edge (12) is formed to fall away in step shape in direction towards the inlet channel (2).

2. Diaphragm valve, which is actuable by pressure means, according to claim 1, characterised thereby that the outer clamping-in surface for the diaphragm (5) is recessed relative to the inner edge of the openings (11) at the outlet side.

3. Diaphragm valve, which is actuable by pressure means, according to claim 1, characterised thereby that the height (h) of the step (12a) of the sealing edge (12) is greater than 0.1 times the thickness (s) of the diaphragm (5), but smaller than 0.5 times the thickness (s) of the diaphragm (5).

## Revendications

1. Soupape à diaphragme commandée par un fluide sous pression, dont la membrane (5) tendue à l'intérieur d'un boîtier (1) est en appui sur élément de support (la) disposé à l'extrémité d'un canal d'entrée (2), comportant des ouvertures (11) concentriques par rapport au canal d'entrée (2), et qui est pourvue d'un chanfrein d'étanchéité (12) concentrique par rapport au canal d'entrée, mais disposé en amont des ouvertures,
**caractérisée en ce que** ledit chanfrein d'étanchéité (12) présente un dégradé en direction du canal d'entrée (2).

2. Soupape à diaphragme commandée par un fluide sous pression, selon la revendication 1,
**caractérisée en ce que** la partie extérieure de la surface de retenue de la membrane (5), opposée au bord intérieur des ouvertures (11) est inclinée du côté de la sortie.

3. Soupape à diaphragme commandée par un fluide sous pression, selon la revendication 1,
**caractérisée en ce que** la hauteur (h) du décalage (12a) du chanfrein d'étanchéité (12) est supérieure à 0,1 fois l'épaisseur (s) de la membrane (5), mais inférieure à 0,5 fois l'épaisseur (s) de la membrane (5).
